# EUROPÄISCHE PATENTSCHRIFT

(11) **EP 1 868 840 B1**
(45) Veröffentlichungstag und Bekanntmachung des Hinweises auf die Patenterteilung: **10.11.2010**
(21) Anmeldenummer: 06725249.4
(22) Anmeldetag: 22.03.2006
(51) Int. Cl.: B60N 2/07

(54) **LÄNGSFÜHRUNG FÜR EINEN KRAFTFAHRZEUGSITZ**
LONGITUDINAL GUIDE FOR AN AUTOMOTIVE SEAT
GLISSIERE LONGITUDINALE POUR SIEGE DE VEHICULE AUTOMOBILE

(30) Priorität: 05.04.2005 DE 102005015650
(43) Veröffentlichungstag der Anmeldung: 26.12.2007
(60) Teilanmeldung: 10163339.4
(73) Patentinhaber: Brose Fahrzeugteile GmbH & Co. KG, Coburg, 96403 Coburg (DE)
(72) Erfinder: SUCK, Wolfgang, 96450 Coburg (DE); RÜCKEL, Daniel, 97653 Bischofsheim (DE); KLOPP, Marcus, 96450 Coburg (DE); MACHT, Alwin, 96250 Ebensfeld (DE); PEITZ, Bernward, 96450 Coburg (DE); SCHRIMPL, Bernhard, 96450 Coburg (DE); KRÖNER, Gregor, 96120 Bischberg (DE); HOFMANN, Jochen, 96257 Marktgraitz (DE)
(74) Vertreter: Blasberg, Tilo
(86) Internationale Anmeldenummer: PCT/EP2006/060966
(87) Internationale Veröffentlichungsnummer: WO 2006/106044

(56) Entgegenhaltungen:
- EP-A- 0 673 799
- EP-A- 1 621 390
- EP-A1- 1 498 299
- EP-A2- 1 336 765
- EP-A2- 1 413 472
- DE-A1- 19 717 667
- DE-A1- 19 812 045
- DE-A1-102004 061 140
- FR-A- 2 872 102
- JP-A- 2004 203 264
- US-A1- 2005 285 008

## Beschreibung

### Gebiet der Erfindung

Die vorliegende Erfindung betrifft eine Längsführung für einen Kraftfahrzeugsitz mit zwei beidseitig des Kraftfahrzeugsitzes am Boden des Innenraums direkt oder indirekt festgelegten Unterschienen.

### Hintergrund der Erfindung

Bei einer solchen Längsführung ist auf jeder Unterschiene verschiebbar eine Oberschiene derart angeordnet, dass beide Schienen in ihrer Funktionslage ein im Wesentlichen rechteckiges Querschnittsprofil bilden, wobei Lagerbereiche der Oberschiene auf der Unterschiene als Umklammerungsbereich ausgebildet sind, die an zwei sich im Wesentlichen diagonal gegenüber liegenden Eckbereichen vorgesehen sind und denen Führungsmittel zugeordnet sind, wobei in einem ersten Lagerbereich zwei unter einem Winkel beabstandet zueinander angeordnete Lagerführungen vorgesehen sind, um vertikal in Richtung der Sitzbelastung gerichtete Kräfte und horizontal gerichtete Kräfte aufzunehmen, und wobei auslaufende Enden der Unterschiene und der Oberschiene in dem ersten Lagerbereich jeweils als im wesentlichen U-förmige Profile ausgebildet sind, die ineinander greifen.

Dabei führen ein in einem unteren Eckbereich der Längsführung vorgesehener erster Lagerbereich und ein in einem oberen Eckbereich diagonal gegenüber liegend vorgesehener zweiter Lagerbereich zu einer Diagonalverspannung der beiden Schienen, so dass die Schienen spielfrei ineinander laufen können. Dabei ist in dem ersten Lagerbereich eine erste Lagerführung vorgesehen, die zur Aufnahme von vertikal in Richtung der Sitzbelastung gerichteten Kräften dient, und ist in dem ersten Lagerbereich rechtwinklig zu dieser eine zweite Lagerführung angeordnet, die zur Aufnahme von horizontal gerichteten Kräften dient. In dem diagonal gegenüber liegenden zweiten Lagerbereich ist eine Kugellagerführung vorgesehen.

Auf Grund der Diagonalverspannung der Längsführung werden die beiden rechtwinklig zueinander angeordneten Lagerführungen im ersten Lagerbereich in einen unteren Eckbereich der Unterschiene gedrückt, was dazu führen kann, dass die zugeordneten Rollenlagerführungen nicht optimal senkrecht zu den zugeordneten Lager- bzw. Abstützflächen ausgerichtet sind. Ferner ist ein zusätzlicher Schutz erforderlich, um ein Anschlagen des auslaufenden Endes des U-förmigen Profils der Oberschiene an dem dieses umklammernden U-förmigen Profil der Unterschiene zu verhindern, was sich bei Lastwechseln insbesondere als Klappergeräusch bemerkbar machen kann. Zu diesem Zweck ist gemäß der DE 198 12 045 A1 ein gesondertes Schutz- oder Gleitprofil am oberen Ende der in der Funktionslage oberen Lagerführung in dem ersten Lagerbereich vorzusehen. Dies ist aufwändig und erfordert einen größeren Bauraum. Ferner führt das zusätzliche Schutz- oder Gleitprofil zu einer größeren wirksamen Hebellänge in dem ersten Lagerbereich, was zu erhöhtem Verschleiß führen kann.

DE 197 17 667 A1 offenbart eine weitere Längsführung für Kraftfahrzeugsitze, bei der die in den diagonal gegenüber liegenden Lagerbereichen auslaufenden Enden der Oberschiene mehrfach gekrümmt ausgebildet sind, so dass in jedem Umklammerungsbereich im Profil gesehen jeweils zwei Kanäle für Kugeln vorgesehen sind, die als Führungsmittel wirken. Eine präzise Ausbildung solcher Endbereiche ist nur vergleichsweise aufwändig zu erzielen, so dass Toleranzen vergleichsweise groß sind. Das Spiel der Längsführung wird auf Grund des höheren Verschleißes, der aus der Punktberührung der Kugellagerführungen resultiert, weiter vergrößert.

JP 2004 203264 A offenbart eine Längsführung für einen Kraftfahrzeugsitz gemäß dem Oberbegriff von Patentanspruch 1. Dabei beinhaltet der erste Lagerbereich im Sinne der vorliegenden Anmeldung jedoch nicht gleichzeitig eine Kugelführung und Rollenführung, sondern zwei Kugelführungen. Der oberen Kugelführung ist dabei jedoch kein Lagerschenkel zugeordnet, der einen spitzen Winkel mit einem anderen Lagerschenkel einschließen könnte. Vielmehr ist die Kugel in einer gewölbt ausgebildeten Längssicke aufgenommen.

EP 1 336 765 A eine Längsführung mit Doppelpaaren von Kugelführungen in jedem Lagerbereich.

Weiterer Stand der Technik gemäß Art. 54(3) EPÜ wird in EP 1 621 390 A, DE 10 2004 061140 A, FR 2 872 102 A und US 2005/285008 A offenbart.

### Zusammenfassung der Erfindung

Aufgabe der vorliegenden Erfindung ist es, eine Längsführung der vorgenannten Art dahingehend weiterzubilden, dass mit einem einfachen mechanischen Aufbau eine höhere mechanische Steifigkeit erzielt werden soll. Gemäß einem weiteren Gesichtspunkt der vorliegenden Erfindung soll die Längsführung Kräfte noch wirkungsvoller aufnehmen. Diese Aufgaben werden gemäß der vorliegenden Erfindung durch eine Längsführung mit den Merkmalen nach Patentanspruch 1 gelöst. Weitere vorteilhafte Ausführungsformen sind Gegenstand der rückbezogenen Unteransprüche.

Erfindungsgemäß ist in der Funktionslage in dem ersten Lagerbereich zumindest ein aufwärts ragender Lagerschenkel relativ zu einer vertikalen Richtung unter einem spitzen Winkel schieneneinwärts geneigt. Somit werden erfindungsgemäß von der Längsführung in dem ersten Lagerbereich aufgenommene Kräfte in eine vertikal abwärts gerichtete Kraftkomponente und in eine horizontal schieneneinwärts gerichtete Kraftkomponente zerlegt, was zu einer Stabilisierung der Diagonalverspannung und der Längsführung führt.

Der schräge bzw. geneigte Lagerschenkel und ein sich diesem anschließender Schenkel, der eine Basis des U-förmigen Profils in dem ersten Lagerbereich bildet, stellen jeweils vergleichsweise kurze Hebel dar, so dass der schräge Lagerschenkel auch größeren Belastungen ohne weiteres standhalten kann, ohne wesentlich verformt zu werden. Somit kann zumindest die Oberschiene aus Profilen von vergleichsweise geringer Wandstärke ausgebildet werden, was Material- und Herstellungskosten reduzieren hilft.

Erfindungsgemäß schließen die beiden Lagerführungen in dem ersten Lagerbereich einen spitzen Winkel miteinander ein. Belastungen, die auf die Längsführung einwirken, führen auf Grund der vorgenannten Kraftzerlegung dazu, dass sich das im wesentlichen U-förmige Profil der Oberschiene in den so gebildeten spitzen Winkel gleichsam hineinkeilt, so dass auch bei größeren Belastungen eine optimale Ausrichtung der Rollenführungen gewährleistet ist.

Gemäß einer weiteren Ausführungsform ist in dem U-förmigen Profil, das den Umklammerungsbereich der Unterschiene ausbildet, zumindest eine Längssicke vorgesehen, die zu einer weiteren Versteifung der Längsführung in dem Umklammerungsbereich führt.

Erfindungsgemäß wird in dem diagonal gegenüber liegenden zweiten Lagerbereich eine Kugellagerführung von zwei einander gegenüber liegenden kreisbogenförmigen Profilen im Wesentlichen vollständig umschlungen, was zu einer noch wirkungsvolleren Abstützung der Oberschiene auf der Unterschiene beiträgt. Dabei kann in dem zweiten Lagerbereich in dem U-förmigen Profil der Unterschiene, das den Umklammerungsbereich ausbildet, eine Längssicke ausgebildet sein, die zu einer weiteren Versteifung der Längsführung in dem zweiten Lagerbereich beiträgt. Insgesamt kann durch eine solche Längssicke erfindungsgemäß erreicht werden, dass der Umschlingungswinkel der oberen Kugellagerführung bei geringem erforderlichen Bauraum noch größer ist und dass eine Krafteinleitung in der Funktionslage weiter unten erfolgen kann, sodass erfindungsgemäß die effektiven Hebelarme, die zum Aufweiten der Längsführung wirksam sind, wirkungsvoll verkürzt werden können, was zu einer weiteren Versteifung der Längsführung in dem zweiten Lagerbereich weiter beiträgt. Insgesamt wirken somit erfindungsgemäß noch geringere Kräfte, die zu einem unerwünschten Aufweiten der Längsführung beitragen.

Insgesamt kann durch die effektivere Abstützung der Oberschiene auf der Unterschiene gleichzeitig eine Reduzierung von schienenauswärts gerichteten Querkräften erzielt werden. Ferner lässt sich erfindungsgemäß eine höhere Torsionssteifigkeit in Fahrzeugslängsrichtung erzielen.

### Figurenübersicht

Nachfolgend wird die Erfindung in beispielhafter Weise unter Bezugnahme auf die beigefügten Zeichnungen beschrieben werden, woraus sich weitere Merkmale, Vorteile und zu lösende Aufgaben ergeben werden und worin:
- Fig. 1: eine Schnittansicht einer Längsführung gemäß einer ersten Ausführungsform der vorliegenden Erfindung darstellt; und
- Fig. 2: in einer vergleichenden Gegenüberstellung und jeweils in einer Schnittansicht die Längsführung gemäß der Fig. 1 sowie erste und zweite Lagerbereiche gemäß weiterer Ausführungsformen der vorliegenden Erfindung darstellt.

In den Figuren bezeichnen identische Bezugszeichen identische oder im Wesentlichen gleichwirkende Elemente oder Elementgruppen.

### Ausführliche Beschreibung von bevorzugten Ausführungsbeispielen

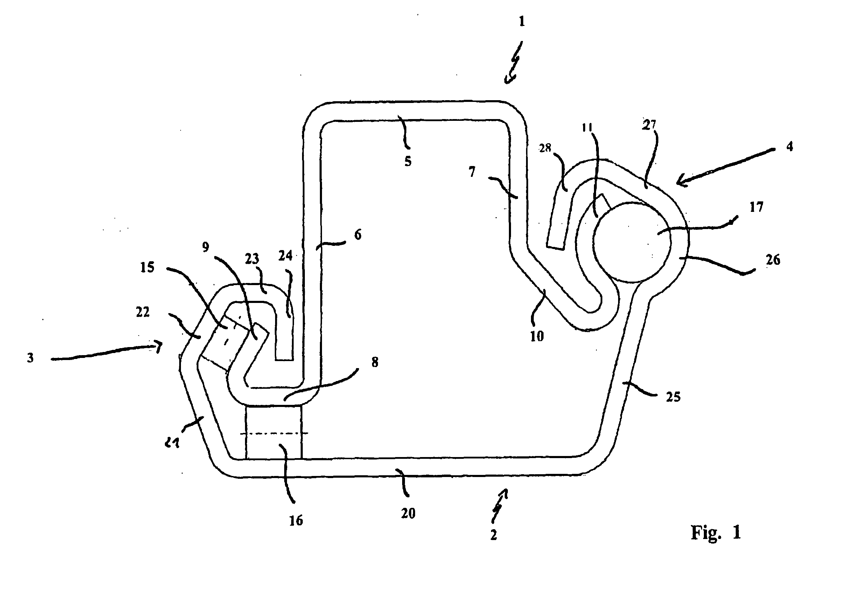

Der in den Figuren nicht dargestellte Fahrzeugsitz ist über zwei beidseitig angeordnete und in Längsrichtung des Fahrzeugs verlaufende Schienenführungen direkt oder indirekt am ebenfalls nicht näher dargestellten Boden eines Kraftfahrzeuges angeordnet. Dabei ist die Oberschiene 1 längsverschiebbar auf der Unterschiene 2 angeordnet. In ihrer Funktionslage, das heißt im zusammengebauten Zustand, ergeben die Oberschiene 1 und die Unterschiene 2 ein im Wesentlichen rechteckiges Querschnittsprofil. Dabei sind die Oberschiene 1 und die Unterschiene 2 jeweils als L-Profil ausgebildet, so dass die Lagerbereiche der Oberschiene 1 auf der Unterschiene 2 einander diagonal gegenüber liegen. Um das Abheben der Oberschiene 1 von der Unterschiene 2 zu verhindern, sind in den Lagerbereichen 3, 4 Umklammerungsbereiche ausgebildet. Genauer gesagt, wird der Umklammerungsbereich im linken unteren Eckbereich der Längsführung von der Basis 20 der Unterschiene 2, von den beiden geneigten Schenkeln 21, 22, dem sich parallel zu der Basis 20 schieneneinwärts erstreckenden Schenkel 23 und dem Schenkel 24 ausgebildet, der im Wesentlichen senkrecht von dem Schenkel 23 abwärts in den Zwischenraum zwischen dem schrägen Lagerschenkel 9 und dem L-Schenkel 6 der Oberschiene 1 hineinragt. Der Umklammerungsbereich der Oberschiene 1 in dem zweiten Lagerbereich 4 wird gemäß der Fig. 1 von dem von der Basis 20 schräg aufwärts abragenden Schenkel 25 mit dem daran ausgebildeten kreisbogenförmigen Profil 26, von dem im Wesentlichen senkrecht zu dem Schenkel 25 schieneneinwärts verlaufenden Verbindungsschenkel 27 und von dem abwärts ragenden Ende 28 der Unterschiene 2 ausgebildet, das in den Zwischenraum zwischen dem kreisbogenförmigen Profil 11 und dem senkrechten Schenkel 7 der Oberschiene 1 hineinragt. Insgesamt umklammern die so ausgebildeten Umklammerungsbereiche die aufwärts ragenden Enden 9, 11 der Oberschiene 1.

In allen Ausführungsbeispielen sind die Schienenprofile ohne Profilverzweigung ausgeführt, können also durch Formgebung eines Stahlblechzuschnittes hergestellt werden, beispielsweise durch Abwinkeln, Prägen, Rollen oder dergleichen. Wenngleich Stahlblech als Material für die Schienen 1, 2 bevorzugt ist, können auch Leichtmetalle, beispielsweise Aluminium, verwendet werden. Die Schienenprofile können auch in gemischter Bauweise ausgeführt sein, beispielsweise die Unterschiene 2 als Aluminiumprofil und die Oberschiene 1 als Stahlblechprofil.

In dem ersten Lagerbereich 3 ist eine erste Lagerführung 16 und eine zweite Lagerführung 15 ausgebildet, im zweiten Lagerbereich 4 ist eine Kugellagerführung 17 vorgesehen. Wie vorstehend ausgeführt, ist der erste Lagerbereich 3 so ausgestaltet, dass die auslaufenden Enden der Schenkel der Unterschiene 2 und der Oberschiene 1 U-Profile ausbilden, die ineinander greifen. Zwischen dem Basisschenkel 8 des U-Profils der Oberschiene 1 und der bodenseitigen Basis 20 der Unterschiene 2 ist die erste Lagerführung 16 angeordnet, deren Rollen in der bekannten Weise in einem Käfig aus Kunststoff, vorzugsweise Polyamid, laufen.

Gemäß der Fig. 1 ist die in der Funktionslage obere Lagerführung 15 in dem ersten Lagerbereich 3 zwischen dem schrägen Lagerschenkel 9 des U-Profils der Oberschiene 1 und dem parallel und beabstandet zu dem schrägen Lagerschenkel 9 verlaufenden schrägen Lagerschenkel 22 der Unterschiene 2 angeordnet. Die Rollen der zweiten Lagerführung 15 können ebenfalls in einem Käfig aus Kunststoff, vorzugsweise Polyamid, laufen.

Gemäß der Fig. 1 ragt der Lagerschenkel 9 der Lagerführung 15 in der Funktionslage von dem Basisschenkel 8 des U-förmigen Profils der Oberschiene 1 aufwärts ab, und zwar schieneneinwärts gerichtet, und schließt dieser in der Funktionslage mit der vertikalen Richtung einen spitzen Winkel ein, der erfindungsgemäß bevorzugt im Bereich von etwa 15° bis etwa 45° liegt. Die von dem schrägen Lagerschenkel 9 aufgenommenen Kräfte werden somit sowohl in eine vertikale Komponente als auch in eine horizontale Komponente zerlegt, wobei die Kraftzerlegung durch den jeweiligen von dem Lagerschenkel 9 und der vertikalen Richtung eingeschlossenen spitzen Winkel vorgegeben wird. Genauer gesagt, ist die vertikale Komponente der aufgenommenen Kraft in der Funktionslage abwärts gerichtet und ist die horizontale Komponente der aufgenommenen Kraft in der Funktionslage schieneneinwärts gerichtet, so dass wirkungsvoll für eine Diagonalverspannung der beiden Lagerbereiche 3, 4 gesorgt ist und einem Abheben der Oberschiene 1 von der Unterschiene 2 wirkungsvoll entgegengewirkt wird. Weil der schräge Lagerschenkel 9 und der Basisschenkel 8 jeweils vergleichsweise kurze Hebel ausbilden, ist das U-förmige Profil der Oberschiene 1 in dem ersten Lagerbereich 3 auch für geringe Wandstärken der Profile vergleichsweise steif.

Gemäß der Fig. 1 ist die Länge des dem schrägen Lagerschenkel 9 gegenüber liegenden schrägen Schenkels 22 geringfügig größer als die Breite der oberen Lagerführung 15, so dass stets eine vollflächige Anlage der oberen Lagerführung 15 an den schrägen Lagerschenkeln 9, 22 gewährleistet ist.

Gemäß der Fig. 1 ist in der Basis des U-förmigen Profils der Unterschiene 2 in dem ersten Lagerbereich 3 eine Sicke ausgebildet, so dass die die Basis bildenden Schenkel 21, 22 jeweils unter einem spitzen Winkel zu der vertikalen Richtung geneigt sind. Dies führt zu einer weiteren Versteifung des U-förmigen Profils der Unterschiene 2 in dem ersten Lagerbereich 3.

Gemäß der Fig. 1 ist in dem zweiten Lagerbereich 4 die Kugellagerführung 17 von zwei kreisbogenförmigen Profilen 11, 26 im Wesentlichen vollständig umschlungen. Das kreisbogenförmige Profil 11 der Oberschiene 1 wird dabei von dem von dem schrägen Schenkel 10 abragenden und ausgebauchten Ende 11 ausgebildet, mit einem Umschlingungswinkel von etwa 110°. Das kreisbogenförmige Profil der Unterschiene 2 wird von einer Ausbauchung 26 des schräg aufwärts ragenden Schenkels 25 ausgebildet, wobei der Umschlingungswinkel geringfügig kleiner als 90° ist. Zwischen den Randbereichen der beiden kreisbogenförmigen Profile 11, 26 ist jeweils nur ein schmaler Spalt ausgebildet, so dass eine gegenseitige Berührung der Randbereiche bei Lastwechseln der Längsführung verhindert ist. Gemäß der Fig. 1 ist die Kugellagerführung 17 insgesamt an einer unter einem spitzen Winkel schräg aufwärts und schieneneinwärts verlaufenden Wirkfläche abgestützt, so dass die von der Kugellagerführung 17 aufgenommenen Kräfte in eine horizontale Komponente, die schieneneinwärts gerichtet ist, und in eine vertikale Komponente, die in der Funktionslage abwärts gerichtet ist, zerlegt werden. Insgesamt werden die beiden Schienen 1, 2 von den beiden Lagerbereichen 3, 4 diagonal vorgespannt.

Gemäß der Fig. 1 ist das kreisbogenförmige Profil 26 am oberen Ende des schrägen Schenkels 25 insgesamt als Sicke ausgebildet, welche zu einer weiteren Versteifung des U-förmigen Profils im zweiten Lagerbereich 4 führt. Gemäß der Fig. 1 entspricht der spitze Winkel, unter dem der Lagerschenkel 9 relativ zu der vertikalen Richtung schieneneinwärts geneigt ist, dem Winkel den der schräge Schenkel 27 mit der horizontalen Richtung einschließt. Wie der Fig. 1 ferner entnommen werden kann, entspricht der spitze Winkel, unter dem der schräge Lagerschenkel 9 relativ zu der vertikalen Richtung schieneneinwärts geneigt ist, demjenigen Winkel, unter dem eine Diagonale, welche Mitten der beiden Lagerbereiche 3, 4 miteinander verbindet, relativ zu der horizontalen Richtung geneigt ist. Die sich aus den genannten Winkelbeziehungen ergebende Symmetrie der Längsführung in Kombination mit den vorstehend beschriebenen Sicken, die in den beiden Lagerbereichen 3, 4 ausgebildet sind, führt zu einer höheren Steifigkeit der Längsführung, zu einer effektiveren Abstützung der Oberschiene 1 auf der Unterschiene 2, zu einer geringeren Aufweitung der Schienen 1, 2 in Fahrzeug-Querrichtung und insgesamt zu einer höheren Torsionssteifigkeit der Längsführung um die Fahrzeuglängsachse.

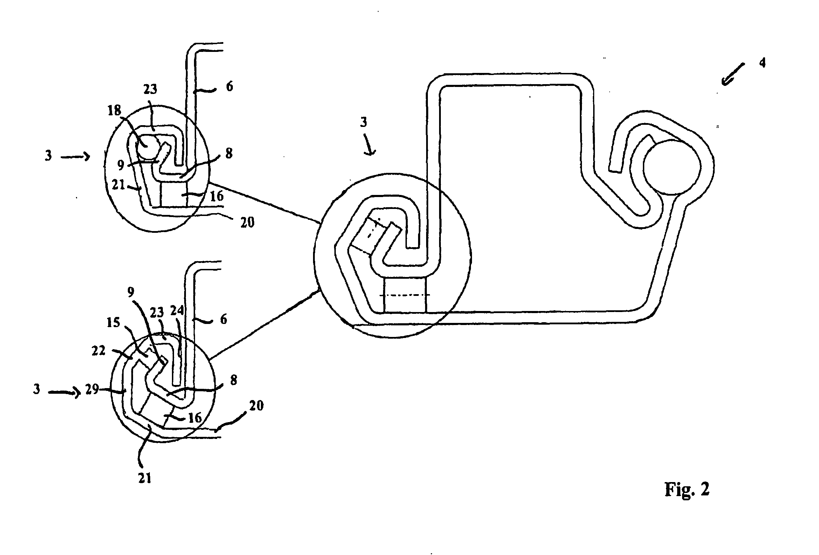

Anhand der Fig. 2 sollen nachfolgend weitere Ausführungsformen gemäß der vorliegenden Erfindung beschrieben werden. Dabei zeigt der zentrale Teil der Fig. 2 nochmals die Längsführung gemäß der Fig. 1, um einen Vergleich mit den weiteren Ausführungsformen zu erleichtern. Wie im linken oberen Teil der Fig. 2 dargestellt, kann die obere Lagerführung im ersten Lagerbereich 3 auch durch eine Kugellagerführung 18 ausgebildet sein, die einerseits auf dem schrägen Lagerschenkel 9 und andererseits im Eckbereich zwischen dem schräg, schienenauswärts und aufwärts ragenden Schenkel 21 und dem horizontalen Basisschenkel 23 des U-förmigen Profils der Unterschiene 2 abgestützt ist. Die in der Funktionslage untere Lagerführung 16 ist bei dieser Ausführungsform als Rollenlagerführung ausgebildet, in der Art, wie vorstehend anhand der Fig. 1 beschrieben.

Wie in dem linken unteren Teil der Fig. 2 dargestellt, kann der Basisschenkel 8 des U-förmigen Profils der Oberschiene 1 auch unter einem spitzen Winkel schienenauswärts geneigt aufwärts verlaufen. Bei dieser Ausführungsform ist das U-förmige Profil der Unterschiene 2 im ersten Lagerbereich 3 insgesamt dreimal gefalzt, so dass dem Basisschenkel 8 ein schräger, paralleler Lagerschenkel 21 gegenüber liegt, um die Rollerflagerführung 16 zwischen diesen aufzunehmen, und so dass dem schrägen Lagerschenkel 9 ein schräger, paralleler Lagerschenkel 22 gegenüber liegt, um dazwischen die obere Rollenlagerführung 15 aufzunehmen, wobei die beiden schrägen Lagerschenkel 21, 22 des U-förmigen Profils der Unterschiene 2 über einen in der Funktionslage vertikalen Verbindungsschenkel 29 miteinander verbunden sind. Wie dem linken unteren Teil der Fig. 2 entnehmbar ist, schließen die beiden Lagerschenkel 8, 9 im Endbereich der Oberschiene 1 einen spitzen Winkel ein, der geringfügig kleiner als 90° ist.

In dem gegenüber liegenden Lagerbereich 4 kann das auslaufende Ende 11 der Oberschiene 1 im zweiten Lagerbereich 4 auch zu einem sich im Wesentlichen vertikal erstreckenden Ende verlängert sein, so dass die Kugellagerführung von dem kreisbogenförmigen Profil 12 noch stärker umschlungen ist als bei dem Ausführungsbeispiel gemäß der Fig. 1. Bei einer solchen Ausführungsform kann der schräge Schenkel 27 (vgl. Fig. 1) am Ende der Unterschiene 2 ersetzt sein durch ein im wesentlichen U-förmiges Profil, das von zwei zueinander parallel und in der Funktionslage im Wesentlichen vertikal verlaufenden Schenkeln ausgebildet wird, zwischen denen ein bogenförmiger Umkehrbereich ausgebildet ist. Bei einer solchen Ausführungsform (nicht gezeigt) kann eine gedachte Linie, welche die Randbereiche des kreisbogenförmigen Profils 12 der Oberschiene in dem zweiten Lagerbereich 4 miteinander verbindet, mit der vertikalen Richtung in der Funktionslage einen spitzen Winkel einschließen, so dass von der Kugellagerführung 17 aufgenommene Kräfte in der vorstehend beschriebenen Weise in eine horizontale und in eine vertikale Komponente zerlegt werden.

Wenn keine hohen Anforderungen an die Leichtgängigkeit der Längsführung gestellt werden die nicht im Rahmen der Erfindung Liegen, dann ist es auch möglich, statt der Rollenführung im ersten Lagerbereich 3 Gleitlagerführungen bzw. Kombinationen von Gleitlagerführungen und Rollenlagerführungen vorzusehen. Dies ist insbesondere dann der Fall, wenn elektrische Antriebe Anwendung finden, die das dann höhere Losbrechmoment ohne Probleme überwinden können.

Wie dem Fachmann ohne weiteres ersichtlich sein wird, können für den praktischen Einsatz Oberschiene 1 und Unterschiene 2 ihre Funktion tauschen. Die Längsführung kann auch um andere Winkel als 0° (wie dargestellt) oder 180° gedreht montiert werden, beispielsweise unter einem Winkel von 90°. Sämtliche solchen äquivalenten Ausführungsformen sollen von dem Schutzbereich der beigefügten Patentansprüche mit umfasst sein.

### Bezugszeichenliste

- 1: Oberschiene
- 2: Unterschiene
- 3: Erste Lagerführung
- 4: Zweite Lagerführung
- 5: Basis der Oberschiene
- 6: L-Schenkel
- 7: Schenkel
- 8: Lagerschenkel
- 9: erstes Ende/schräger Lagerschenkel
- 10: schräger Schenkel
- 11: zweites Ende/kreisbogenförmiges Profil
- 12: Kreisbogenförmiges Profil
- 15: Rollenkäfig/Gleitbeschichtung
- 16: Rollenkäfig
- 17: Kugellagerführung
- 18: Kugellagerführung
- 20: Basis der Unterschiene
- 21: schräger Schenkel
- 22: schräger Lagerschenkel
- 23: Schenkel
- 24: Ende
- 25: schräger Schenkel
- 26: Kreisbogenförmiges Profil
- 27: Schenkel
- 28: Ende

## Patentansprüche

1. Längsführung für einen Kraftfahrzeugsitz mit zwei beidseitig des Kraftfahrzeugsitzes am Boden des Innenraums direkt oder indirekt festlegbaren Unterschienen (2), wobei auf jeder Unterschiene verschiebbar eine Oberschiene (1) angeordnet ist, derart, dass beide Schienen (1, 2) ein im Wesentlichen rechteckiges Querschnittsprofil bilden, wobei ein erster und ein zweiter Lagerbereich (3, 4) der Oberschiene auf der Unterschiene jeweils als Umklammerungsbereich ausgebildet ist und den Lagerbereichen (3, 4) Führungsmittel (15-18) zugeordnet sind, wobei
in dem ersten Lagerbereich (3) zwei unter einem Winkel beabstandet zueinander angeordnete Lagerführungen (15, 16; 18, 16) vorgesehen sind, um vertikal in Richtung der Sitzbelastung gerichtete Kräfte und horizontal gerichtete Kräfte aufzunehmen,
auslaufende Enden (8-9, 21-24) der Unterschiene (2) und der Oberschiene (1) in dem ersten Lagerbereich (3) jeweils als im wesentlichen U-förmige Profile ausgebildet sind, die ineinander greifen,
ein Lagerschenkel (9, 22) eines U-förmigen Profils oder der U-förmigen Profile aufwärts ragt und relativ zu einer vertikalen Richtung unter einem spitzen Winkel schieneneinwärts geneigt ist,
eine obere Lagerführung (15; 18) der beiden Lagerführungen in dem ersten Lagerbereich (3) an dem aufwärts ragenden und schieneneinwärts geneigten Lagerschenkel (9) abgestützt ist, und
der zweite Lagerbereich (4) durch eine Kugellagerführung (17) ausgebildet ist,
**dadurch gekennzeichnet, dass** die Lagerbereiche (3, 4) an zwei sich im Wesentlichen diagonal gegenüber liegenden Eckbereichen der Längsführung vorgesehen sind, die untere Lagerführung (16) der beiden Lagerführungen in dem ersten Lagerbereich (3) als Rollenlagerführung ausgebildet ist und die beiden Lagerführungen (15, 16; 18, 16) in dem ersten Lagerbereich (3) miteinander einen spitzen Winkel einschließen, wobei die Kugellagerführung (17) in dem zweiten Lagerbereich (4) an einer unter einem spitzen Winkel schräg schieneinwärts verlaufenden Wirkfläche (27) abgestützt ist, wobei die Kugellagerführung (17) von einem ersten kreisbogenförmigen Profil (11, 12), das an einem Endbereich der Oberschiene (1) ausgebildet ist, und von einem zweiten kreisbogenförmigen Profil (26) am oberen Ende eines schrägen Schenkels (25) der Unterschiene ausgebildet ist, das an dem Umklammerungsbereich der Unterschiene (2) ausgebildet ist und die beiden kreisbogenförmigen Profile (11, 12; 26) die Kugellagerführung (17) nahezu vollständig umschlingen, so dass zwischen Randbereichen der kreisbogenförmigen Profile nur ein schmaler Spalt ausgebildet ist, um eine gegenseitige Berührung der Randbereiche bei Lastwechseln der Längsführung zu verhindern.

2. Längsführung nach Anspruch 1, wobei der spitze Winkel, unter dem der zumindest eine Lagerschenkel (9, 22) relativ zu der vertikalen Richtung schieneneinwärts geneigt ist, im Bereich zwischen 15° und 45° liegt.

3. Längsführung nach Anspruch 2, wobei der spitze Winkel, unter dem der zumindest eine Lagerschenkel (9, 22) relativ zu der vertikalen Richtung schieneneinwärts geneigt ist, einem Winkel entspricht, unter dem eine Diagonale, welche Mitten der beiden Lagerbereiche (3, 4) miteinander verbindet, relativ zu einer horizontalen Richtung geneigt ist.

4. Längsführung nach einem der vorhergehenden Ansprüche, wobei ein Basisschenkel (21, 22) des U-förmigen Profils der Unterschiene (2) in dem ersten Lagerbereich (3) zumindest einmal gefalzt ist, um einen im Profil vieleckigen Endbereich der Unterschiene auszubilden.

5. Längsführung nach einem der vorhergehenden Ansprüche, wobei die Länge des dem geneigten Lagerschenkel (9), der an der Oberschiene (1) ausgebildet ist, gegenüber liegenden Lagerschenkels (22), der an der Unterschiene (2) ansgebildet ist, größer ist als die Länge des Lagerschenkels (9) an der Oberschiene (1).

6. Längsführung nach einem der vorhergehenden Ansprüche, wobei die untere Lagerführung (16) der beiden Lagerführungen (15, 16; 18, 16) in dem ersten Lagerbereich (3) horizontal ausgerichtet ist.

7. Längsführung nach einem der Ansprüche 1 bis 5, wobei die untere Lagerführung (16) der beiden Lagerführungen (15, 16; 18, 16) in dem ersten Lagerbereich (3) unter einem spitzen Winkel relativ zu der vertikalen Richtung abwärts geneigt ist.

8. Längsführung nach einem der vorhergehenden Ansprüche, wobei die obere Lagerführung (18) der beiden Lagerführungen (18, 16) in dem ersten Lagerbereich (3) als Kugellagerführung ausgebildet ist.

9. Längsführung nach einem der vorhergehenden Ansprüche, wobei eine gedachte Linie, welche die Randbereiche des an dem Endbereich der Oberschiene (1) vorgesehenen kreisbogenförmigen Profils (12) miteinander verbindet, in der Funktionslage relativ zu der vertikalen Richtung unter einem spitzen Winkel schieneneinwärts geneigt ist.

10. Längsführung nach Anspruch 9, wobei der spitze Winkel, unter dem die gedachte Linie relativ zu der vertikalen Richtung schieneneinwärts geneigt ist, dem spitzen Winkel entspricht, unter dem der zumindest eine geneigte Lagerschenkel (9, 22) relativ zu der vertikalen Richtung schieneneinwärts geneigt ist.

## Claims

1. Longitudinal guide for an automotive vehicle seat, having two lower rails (2) which can be fixed, on both sides of the automotive vehicle seat, directly or indirectly to the floor of the interior, an upper rail (1) being disposed displaceably on each lower rail such that both rails (1, 2) form an essentially rectangular cross-sectional profile, a first and a second bearing region (3, 4) of the upper rail being configured on the lower rail respectively as an enclosing region, and guiding means (15 - 18) being assigned to the bearing regions (3, 4),
there being provided in the first bearing region (3) two bearing guides (15, 16; 18, 16) which are disposed spaced at an angle relative to each other in order to absorb forces which are directed vertically in the direction of the seat load and forces directed horizontally,
outwardly extending ends (8 - 9, 21 - 24) of the lower rail (2) and of the upper rail (1) in the first bearing region (3) being configured respectively as essentially U-shaped profiles which engage one in the other,
a bearing leg (9, 22) of a U-shaped profile or of the U-shaped profiles projecting upwards and being inclined at an acute angle, relative to a vertical direction, towards the rails,
an upper bearing guide (15; 18) of the two bearing guides in the first bearing region (3) being supported on the bearing leg (9) which projects upwards and is inclined inwards towards the rails, and
the second bearing region (4) being configured by a ball bearing guide (17),
**characterised in that** the bearing regions (3, 4) are provided at two corner regions of the longitudinal guide which are situated essentially diagonally opposite, the lower bearing guide (16) of the two bearing guides in the first bearing region (3) is configured as a roller bearing guide and the two bearing guides (15, 16; 18, 16) in the first bearing region (3) together include an acute angle, the ball bearing guide (17) in the second bearing region (4) being supported on an effective surface (27) which extends diagonally towards the rails at an acute angle, the ball bearing guide (17) being configured by a first circular arc profile (11, 12), which is configured on one end region of the upper rail (1), and by a second circular arc profile (26), on the upper end of a diagonal leg (25) of the lower rail, which is configured on the enclosing region of the lower rail (2), and the two circular arc profiles (11, 12; 26) winding around the ball bearing guide (17) virtually completely, so that only a narrow gap is configured between edge regions of the circular arc profiles, in order to prevent mutual contact of the edge regions during load alternation of the longitudinal guide.

2. Longitudinal guide according to claim 1, the acute angle at which the at least one bearing leg (9, 22) is inclined, relative to the vertical direction, towards the rails being in the range between 15° and 45°.

3. Longitudinal guide according to claim 2, the acute angle at which the at least one bearing leg (9, 22) is inclined, relative to the vertical direction, towards the rails corresponding to an angle at which a diagonal, which connects together centres of the two bearing regions (3, 4), is inclined relative to a horizontal direction.

4. Longitudinal guide according to one of the preceding claims, a base leg (21, 22) of the U-shaped profile of the lower rail (2) in the first bearing region (3) being folded at least once in order to form an end region of the lower rail which is polygonal in profile.

5. Longitudinal guide according to one of the preceding claims, the length of the bearing leg (22), which is configured on the lower rail (2) and is situated opposite the inclined bearing leg (9) which is configured on the upper rail (1), being greater than the length of the bearing leg (9) on the upper rail (1).

6. Longitudinal guide according to one of the preceding claims, the lower bearing guide (16) of the two bearing guides (15, 16; 18, 16) in the first bearing region (3) being aligned horizontally.

7. Longitudinal guide according to one of the claims 1 to 5, the lower bearing guide (16) of the two bearing guides (15, 16; 18, 16) in the first bearing region (3) being inclined downwards at an acute angle relative to the vertical direction.

8. Longitudinal guide according to one of the preceding claims, the upper bearing guide (18) of the two bearing guides (18, 16) in the first bearing region (3) being configured as a ball bearing guide.

9. Longitudinal guide according to one of the preceding claims, an imaginary line which connects together the edge regions of the circular arc profile (12) provided on the end region of the upper rail (1) being inclined in the functional position at an acute angle, relative to the vertical direction, towards the rails.

10. Longitudinal guide according to claim 9, the acute angle at which the imaginary line is inclined, relative to the vertical direction, towards the rails corresponding to the acute angle at which the at least one inclined bearing leg (9, 22) is inclined, relative to the vertical direction, towards the rails.

## Revendications

1. Guide longitudinal pour un siège de véhicule automobile, comprenant deux rails inférieurs (2) pouvant être fixés, directement ou indirectement, sur le plancher de l'habitacle de part et d'autre du siège de véhicule automobile, dans lequel un rail supérieur (1) est disposé sur chaque rail inférieur de manière à coulisser, si bien que les deux rails (1, 2) forment un profil de section essentiellement carrée, dans lequel une première et une deuxième zone d'appui (3, 4) du rail supérieur sur le rail inférieur sont chacune configurées comme une zone de retenue et des moyens de guidage (15 à 18) sont associés aux zones d'appui (3, 4) ; dans lequel
il est prévu dans la première zone d'appui (3) deux guides d'appui (15, 16 ; 18, 16) formant entre eux un angle, afin d'encaisser des forces orientées verticalement, dans le sens de la sollicitation du siège, et des forces orientées horizontalement ;
des extrémités finales (8 et 9, 21 à 24) du rail inférieur (2) et du rail supérieur (1), dans la première zone d'appui (3), prennent la forme de profilés essentiellement en forme de U engagés l'un dans l'autre ;
une branche d'appui (9, 22) d'un profilé en forme de U ou des profils en forme de U est dressée vers le haut et est inclinée vers l'intérieur du rail selon un angle aigu par rapport à la direction verticale ;
un guide d'appui supérieur (15 ; 18) des deux guides d'appui s'appuie dans la première zone d'appui (3) sur la branche d'appui (9) dressée vers le haut et inclinée vers l'intérieur du rail ; et
la deuxième zone d'appui (4) est formée par une glissière à billes (17) ;
**caractérisé en ce que** les zones d'appui (3, 4) sont prévues dans deux zones angulaires du guide
longitudinal sensiblement diagonalement opposées, le guide d'appui inférieur (16) des deux guides d'appui prend la forme d'un guide à rouleaux dans la première zone d'appui (3) et les deux guides d'appui (15, 16 ; 18, 16) définissent ensemble un angle aigu dans la première zone d'appui (3), dans lequel la glissière à billes (17), dans la deuxième zone d'appui (4), s'appuie sur une surface active (27) inclinée vers l'intérieur du rail selon un angle aigu, dans lequel la glissière à billes (17) est formée par un premier profil (11, 12) en forme d'arc de cercle qui est formé à une extrémité du rail supérieur (1) et par un deuxième profilé (26) en forme d'arc de cercle situé à l'extrémité supérieure d'une branche inclinée (25) du rail inférieur qui est formée dans la zone de retenue du rail inférieur (2) et dans lequel les deux profilés (11, 12 ; 26) en forme d'arc de cercle entourent presque totalement la glissière à billes (17), si bien qu'il ne subsiste qu'une fente étroite entre les régions marginales des profilés en forme d'arc de cercle, afin d'éviter un contact réciproque entre les régions marginales en cas de variations de la charge du guide longitudinal.

2. Guide longitudinal selon la revendication 1, dans lequel l'angle aigu d'inclinaison de ladite au moins une branche d'appui (9, 22) vers l'intérieur du rail, par rapport à la direction verticale, est compris dans la plage allant de 15 ° à 45 °.

3. Guide longitudinal selon la revendication 2, dans lequel l'angle aigu d'inclinaison de ladite au moins une branche d'appui (9, 22) vers l'intérieur du rail, par rapport à la direction verticale, correspond à un angle d'inclinaison d'une diagonale reliant entre eux des centres des deux zones d'appui (3, 4), par rapport à une direction horizontale.

4. Guide longitudinal selon l'une des revendications précédentes, dans lequel une branche de base (21, 22) du profilé en forme de U du rail inférieur (2) est repliée au moins une fois dans la première zone d'appui (3) afin de former une extrémité du rail inférieur de forme polygonale en profil.

5. Guide longitudinal selon l'une des revendications précédentes, dans lequel la longueur de la branche d'appui (22) qui est formée sur le rail inférieur (2) et qui est opposée à la branche d'appui (9) inclinée qui est formée sur le rail supérieur (1) est plus grande que la longueur de la branche d'appui (9) sur le rail supérieur (1).

6. Guide longitudinal selon l'une des revendications précédentes, dans lequel le guide d'appui inférieur (16) des deux guides d'appui (15, 16 ; 18, 16), est orienté horizontalement dans la première zone d'appui (3).

7. Guide longitudinal selon l'une des revendications 1 à 5, dans lequel le guide d'appui inférieur (16) des deux guides d'appui (15, 16 ; 18, 16) est incliné d'un angle aigu dans la première zone d'appui (3), par rapport à la direction verticale.

8. Guide longitudinal selon l'une des revendications précédentes, dans lequel le guide d'appui supérieur (18) des deux guides d'appui (18, 16) prend la forme d'une glissière à billes dans la première zone d'appui (3).

9. Guide longitudinal selon l'une des revendications précédentes, dans lequel, dans la position de fonctionnement, une ligne imaginaire qui relie entre elles les régions marginales du profil en forme d'arc de cercle (12) réalisé à l'extrémité du rail supérieur (1) est inclinée
vers l'intérieur du rail selon un angle aigu par rapport à la direction verticale.

10. Guide longitudinal selon la revendication 9, dans lequel l'angle aigu d'inclinaison de la ligne imaginaire vers l'intérieur du rail par rapport à la direction verticale correspond à l'angle aigu d'inclinaison vers l'intérieur du rail, par rapport à la direction verticale, de ladite au moins une branche d'appui (9, 22).
